# EUROPÄISCHE PATENTSCHRIFT

(11) **EP 1 990 563 B1**
(45) Veröffentlichungstag und Bekanntmachung des Hinweises auf die Patenterteilung: **11.09.2013**
(21) Anmeldenummer: 07009202.8
(22) Anmeldetag: 08.05.2007
(51) Int. Cl.: F16J 3/04, B61D 17/22

(54) **Balg, insbesondere Falten- oder Wellenbalg**
Bellows
Soufflet

(43) Veröffentlichungstag der Anmeldung: 12.11.2008
(73) Patentinhaber: Hübner GmbH, 34123 Kassel (DE)
(72) Erfinder: Goebels, André, 34134 Kassel (DE)
(74) Vertreter: Walther, Walther & Hinz GbR

(56) Entgegenhaltungen:
- EP-A- 1 782 974
- DE-A1- 4 138 922
- US-A- 903 893
- US-A- 5 456 186

## Beschreibung

Die vorliegende Erfindung betrifft einen Balg, insbesondere einen Falten- oder Wellenbalg eines Übergangs mit einem Übergangsboden zwischen zwei gelenkig miteinander verbundenen Fahrzeugen oder dem Balg einer Fluggastbrücke, wobei der Balg ein beschichtetes Gewebe, Gewirke oder Gestrick aufweist.

Grundsätzlich wird unterschieden zwischen schienengebundenen Gelenkfahrzeugen, wie z. B. Straßenbahnzüge und Eisenbahnzüge, oder straßengebundenen Gelenkfahrzeuge, wie z. B. Gelenkomnibusse. Die derart miteinander verbundenen Fahrzeugteile, beispielsweise eines Schienenfahrzeugs oder eines Gelenkomnibusses, weisen einen Übergang auf, der mindestens einen Balg umfasst, der sowohl den Boden, gegebenenfalls auch das Gelenk tunnelförmig umgibt, um Personen den Übergang von einem Fahrzeugteil zum anderen Fahrzeugteil zu ermöglichen, ohne dass diese Witterungseinflüssen ausgesetzt sind. In diesem Zusammenhang ist anzumerken, dass die Bälge als Falten- oder Wellenbälge ausgebildet sind, wobei insbesondere Wellenbälge bei schienengebundenen Fahrzeugen und Faltenbälge bei Gelenkomnibussen zum Einsatz kommen.

Aus der US 903 893 A ist ein Aufbau eines Faltenbalges aus einem beschichteten, wasserabweisenden und feuersicheren Material bekannt, wobei die einzelnen Falten durch eine Abdeckung über einer jeden Falte jeweils eine geschlossene Einheit bilden. Auch die Faltenabdeckung kann aus feuersicherem Material hergestellt sein.

Bei schienengebundenen Fahrzeugen, wie insbesondere Eisenbahnzügen, ist der Boden als Gliederbrücke ausgebildet. Derartige Gliederbrücken sind im Stand der Technik hinreichend bekannt. Die Plattform eines Gelenkomnibusses stellt sich hingegen als ein im Wesentlichen kreisbogenförmiges Element dar, wobei das kreisbogenförmige Element Bestandteil des Bodens des Busses ist.

Insbesondere bei Schienenfahrzeugen besteht nunmehr die Forderung, dass im Bereich des Übergangs der Boden einen gewissen Widerstand gegen die Einwirkung von Feuer aufweist, also flammhemmend ausgebildet ist. In diesem Zusammenhang ist man dazu übergegangen, die DIN-ISO A 834, die eigentlich für Gebäude geschaffen wurde, auch für die Böden von Übergängen zwischen gelenkig miteinander verbundenen Fahrzeugen anzuwenden. Entsprechend dieser ISO 834, der NFPA 130 (USA) oder der BS 6853 in England oder ASTME 119 wird schlussendlich vorgeschrieben, dass ein solcher Boden eines Übergangs bei Wärmeeinwirkung von unten über eine bestimmte Zeit einer bestimmten thermischen Belastung standhalten muss. Im Einzelnen ist hierbei vorgeschrieben, dass auf der Oberseite des Bodens nach 20 min. eine Temperatur von 140° C und nach 40 min. eine Temperatur von 180° C nicht überschritten werden darf, jeweils bezogen auf einen Anfangswert von 20° C . Es soll ebenfalls verhindert werden, dass die Flammen durchschlagen und dass Gase aus der Verbrennung in das Innere eindringen können.

In diesem Zusammenhang ist bereits aus der EP-A-1782974 bekannt, den Boden oder Teile des Bodens mit Isoliermaterial oder Flammschutzmittel derart zu versehen, dass hierdurch bei auf der Unterseite des Bodens befindlicher Wärmequelle eine vorbestimmte Temperatur auf der Oberseite des Bodens nicht überschritten wird. Ein solches Flammschutzmittel kann unter Wärmeeinwirkung wasserabspaltend ausgebildet sein. Mit derartigen Böden wurden bereits hinreichend gute Ergebnisse erzielt, allerdings nicht über einen Zeitraum von etwa 20 min. hinaus.

Der Erfindung liegt daher die Aufgabe zu Grunde, einen Balg der eingangs genannten Art bereitzustellen, der unter einem Boden eines Übergangs eingebaut ist und verhindert, dass die Temperatur auf der Bodenoberseite innerhalb eines bestimmten Zeitraumes einen bestimmten, vorgegebenen Wert überschreitet.

Zur Lösung der Aufgabe wird erfindungsgemäß vorgeschlagen, dass zumindest auf einer Seite des Balges, also auf der äußeren, bevorzugt allerdings auf der inneren Seite des Balges ein Kissen vorgesehen ist, wobei das Kissen intumeszierendes, feuerhemmendes, isolierendes Material aufweist. Durch eine Volumenvergrößerung, die mit einer Porenbildung des Materials einhergeht, wird eine hohe Isolierwirkung erreicht. Ist das Isoliermaterial oder das Flammschutzmittel zusätzlich noch wasserabspaltend, d. h. das Mittel setzt während der Wärmeeinwirkung, beispielsweise durch eine Flamme Wasser frei, dann wird hierdurch zusätzliche Verdunstungskälte erzeugt, was wiederum bewirkt, dass die Temperatur über einen bestimmten Zeitraum die vorgegebenen Werte nicht überschreitet.

Im Einzelnen ist vorgesehen, dass das Kissen mit dem intumeszierenden, feuerhemmenden Material flexibel ist. Dies vor dem Hintergrund, dass der Balg in der Lage sein muss, sämtlichen Fahrbewegungen, wie Nick-, Wank- und Knickbewegungen nachgeben zu können.

Nach einem besonderen Merkmal der Erfindung ist weiterhin vorgesehen, dass das Kissen mit dem Balg verbunden ist. Hierdurch wird sichergestellt, dass das Kissen während der Fahrbewegung und der Bewegung des Balges in seiner Lage verbleibt.

Nach einem weiteren Merkmal der Erfindung kann der Balg zur Bildung eines Hohlraumes doppelwandig ausgebildet, also aufgedoppelt sein, wobei zur Bildung des Kissens das intumeszierende, feuerhemmende Material in dem Hohlraum untergebracht ist. Hierbei wird somit ein sich über die Falten- oder Wellenlänge erstreckendes Kissen gebildet.

Nach einem weiteren Merkmal der Erfindung ist das Kissen zumindest im Falten- oder Wellengrund einer Falte oder Welle des Balges angeordnet. Grundsätzlich besteht allerdings auch die Möglichkeit, das Kissen quasi als zweite Haut über den gesamten Verlauf des Balges im Bereich des Balgbodens zu verlegen und am Balg zu fixieren.

Anhand der Zeichnungen wird die Erfindung nachstehend beispielhaft näher erläutert.
- Figur 1: zeigt schematisch ein Gelenkfahrzeug, wobei zwischen dem Gelenkfahrzeug ein Übergang vorgesehen ist;
- Figur 2: zeigt eine erste Ausführungsform eines Balges in Form eines aufgedoppelten Wellenbalges mit in dem dadurch gebildeten Hohlraum angeordneten intumeszierenden Material;
- Figur 3: zeigt in einer zweiten Ausführungsform einen Wellenbalg, bei dem im Balggrund der jeweiligen Welle jeweils ein Kissen mit intumeszierendem Material angeordnet ist;
- Figur 4: zeigt eine Ausführungsform eines aufgedoppelten Faltenbalges.

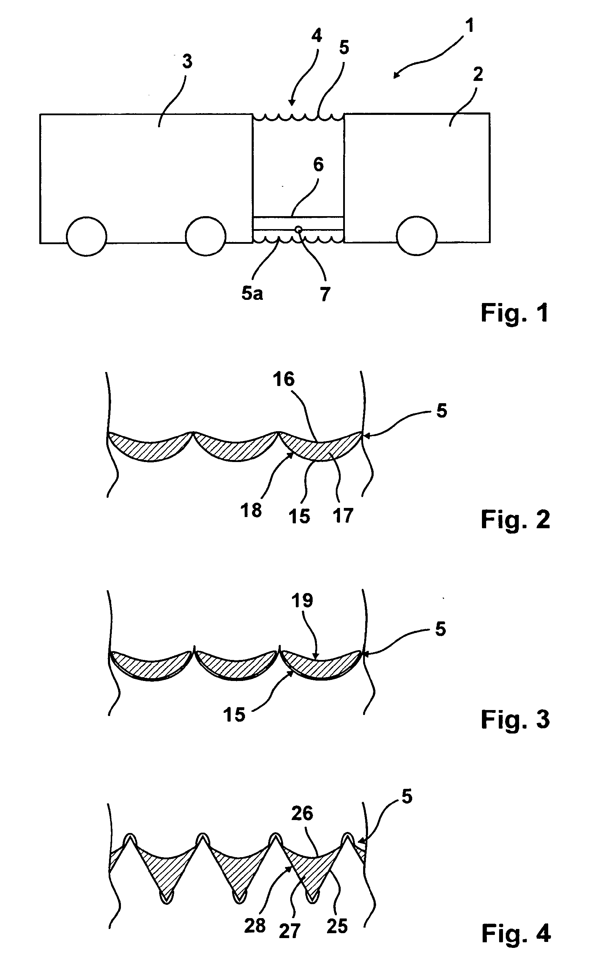

Gemäß Figur 1 weist das mit 1 bezeichnete Gelenkfahrzeug die beiden Fahrzeugteile 2 und 3 auf, zwischen denen der Übergang 4 angeordnet ist. Der Übergang 4 umfasst den Wellenbalg 5 sowie die Übergangsbrücke oder Übergangsboden 6. Unterhalb der Übergangsbrücke befindet sich üblicherweise das mit 7 bezeichnete Gelenk. Der Balg 5, der im Querschnitt in etwa tunnelförmig ausgebildet ist, umspannt sowohl den Übergangsboden 6 als auch das Gelenk 7.

Gegenstand der Erfindung ist nun, wie verhindert werden kann, dass bei einem Brand unterhalb des Balgbodens 5a, der Übergangsboden 6 über einen bestimmten Zeitraum eine bestimmte, vorgegebene Temperatur auf seiner Oberseite nicht überschreitet. In diesem Zusammenhang wird auf die Figuren 2 und 3 verwiesen, wobei die Figur 2 einen sogenannten aufgedoppelten Balg zeigt. Ein aufgedoppelter Balg ist ein solcher, bei dem die eigentliche Welle des Balges 5 beabstandet zum äußeren Balgmantel 15 einer jeden Welle eine Balginnenmantelfläche 16 aufweist, die unter Bildung eines Abstandes einen Hohlraum 17 mit dem Außenmantel bildet, wobei in diesem Hohlraum 17 intumeszierendes Material angeordnet ist. Hierbei entsteht ein Kissen 18 im Bereich einer jeden Welle eines Wellenbalges.

Eine im Wesentlichen gleiche Ausführungsform ergibt sich bei Betrachtung von Figur 3 insofern, als dort der Balg 5 Kissen 19 aufzeigt, die jeweils im Grund der Welle des Balges angeordnet sind und mit dem Balg z. B. durch Nähen oder Kleben verbunden sind. Ein solches Kissen 25 ist ebenfalls mit einem intumeszierenden Material gefüllt.

Gleiches gilt äquivalent auch für einen Faltenbalg. Figur 4 zeigt in diesem Zusammenhang beispielhaft einen aufgedoppelten Faltenbalg 28 mit Außenwandung 25 sowie einer beabstandet dazu angeordnete Innenmantelfläche 26. In dem hierbei gebildeten Hohlraum 27 befindet sich intumeszierendes Material, wobei hierdurch das Kissen 28 gebildet wird.

Wesentlich ist, dass das durch die Aufdoppelung entstandene Kissen bzw. durch die Anordnung des Kissens auf der Innenseite des Balges die Flexibilität des Balges im Prinzip nicht leidet. Dies deshalb, weil bekanntermaßen der Balg in der Lage sein muss, sämtlichen Fahrbewegungen eines Gelenkfahrzeugs nachzugeben. Es hat sich herausgestellt, dass ein intumeszierendes, feuerhemmendes und flexibles Material unter der Bezeichnung "Interdens®" oder auch der Bezeichnung "Exterdens®" von der Firma Dr. Wolman GmbH aus D-76547 Sinzheim angeboten wird. Mit einem mit einem solchen Material ausgerüsteten Balg wird erreicht, dass die Temperatur bei einer unmittelbar unterhalb des Balges angeordneten Wärmequelle, z. B. in Form eines Brenners mit einer bestimmten Leistung, die Temperatur auf dem Übergangsboden von 140° C über einen Zeitraum von 20 min. bzw. 180° C bei 40 min. nicht überschritten wird.

## Patentansprüche

1. Balg (5), insbesondere Falten- oder Wellenbalg eines Übergangs (4) mit einem Übergangsboden zwischen zwei gelenkig miteinander verbundenen Fahrzeugen (2, 3) oder Balg einer Fluggastbrücke, wobei der Balg (5) ein beschichtetes Gewebe, Gewirk oder Gestrick aufweist,
**dadurch gekennzeichnet, daß** zumindest auf einer Seite des Balges (5) mindestens ein Kissen (18, 19, 28) vorgesehen ist, wobei das mindestens ein Kissen (18, 19, 28) ein intumeszierendes, feuerhemmendes Material aufweist.

2. Balg nach Anspruch 1,
**dadurch gekennzeichnet, dass** das mindestens ein Kissen (18, 19, 28) mit dem intumeszierenden, feuerhemmenden Material flexibel ist.

3. Balg nach einem der voranstehenden Ansprüche,
**dadurch gekennzeichnet,**
**dass** das mindestens ein Kissen (18, 19, 28) mit dem Balg (5) verbunden ist.

4. Balg nach einem der voranstehenden Ansprüche,
**dadurch gekennzeichnet,**
**dass** der Balg (5) zur Bildung eines Hohlraumes (17, 27) doppelwandig ausgebildet ist, wobei zur Bildung des mindestens ein Kissens (18, 28) das intumeszierende, feuerhemmende Material in dem Hohlraum (17, 27)
untergebracht ist.

5. Balg nach einem der voranstehenden Ansprüche,
**dadurch gekennzeichnet,**
**dass** das mindestens ein Kissen (18, 19, 28) zumindest im Wellen- oder Faltengrund des Balges (5) angeordnet ist.

## Claims

1. A bellows (5), more specifically a folding or corrugated bellows of a gangway (4) with a gangway floor between two articulately connected vehicles (2, 3) or a bellows of an air passenger bridge, wherein the bellows (5) has a coated fabric, warp-knitted fabric or weft-knitted fabric,
**characterized in that** at least one pad (18, 19, 28) is provided at least on one side of the bellows (5), wherein the at least one pad (18, 19, 28) comprises an intumescent fire-resisting material.

2. The bellows according to claim 1,
**characterized in that**
the at least one pad (18, 19, 28) with the intumescent fire-resisting material is flexible.

3. The bellows according to one of the afore-mentioned claims, **characterized in that**
the at least one pad (18, 19, 28) is connected to the bellows (5).

4. The bellows according to one of the afore-mentioned claims, **characterized in that**
the bellows (5) is configured to be double-walled for forming a hollow space (17, 27), wherein in order to form the at least one pad (18, 28), the intumescent, fire-resisting material is accommodated in the hollow space (17, 27).

5. The bellows according to one of the afore-mentioned claims, **characterized in that**
the at least one pad (18, 19, 28) is disposed at least in the base of the fold or corrugation of the bellows (5).

## Revendications

1. Soufflet (5), en particulier soufflet à plis ou à vagues pour un passage (4) avec plancher de communication entre deux véhicules articulés couplés entre eux (2, 3), ou soufflet de pont pour passagers d'un avion, dans lequel le soufflet (5) comporte un tissu ou un tricot enduit, **caractérisé en ce que,**
le soufflet (5) comporte, sur au moins un côté, au moins un coussin (18, 19, 28), ledit au moins un coussin (18, 19, 28) comportant un matériau incombustible, coupe-feu.

2. Soufflet selon la revendication 1,
**caractérisé en ce que,**
ledit au moins un coussin (18, 19, 28) avec le matériau incombustible, coupe-feu a une consistance flexible.

3. Soufflet selon l'une quelconque des revendications, **caractérisé en ce que,**
ledit au moins un coussin (18, 19, 28) est lié au soufflet (5)

4. Soufflet selon l'une quelconque des revendications, **caractérisé en ce que,**
le soufflet (5) présente une double paroi en vue de constituer un espace creux (17, 27), dans lequel, le matériau incombustible, coupe-feu, pour la formation dudit au moins un coussin (18, 28) est logé dans l'espace creux (17, 27).

5. Soufflet selon l'une quelconque des revendications, **caractérisé en ce que,**
ledit au moins un coussin (18, 19, 28) est logé au moins dans le fond des plis ou des vagues du soufflet (5).
